# EUROPÄISCHE PATENTANMELDUNG

(11) **EP 1 459 926 A2**
(43) Veröffentlichungstag der Anmeldung: **22.09.2004**
(21) Anmeldenummer: 04003774.9
(22) Anmeldetag: 19.02.2004
(51) Int. Cl.: B60K 17/22

(54) **Antriebsstrang für Fahrzeuge**

(30) Priorität: 21.03.2003 DE 10312577
(71) Anmelder: Bayerische Motoren Werke Aktiengesellschaft, 80809 München (DE)
(72) Erfinder: Raith, Andreas, 85521 Ottobrunn (DE); Doepke, Hubertus, 82279 Eching (DE)

(57) **Zusammenfassung**

Antriebsstrang für Fahrzeuge mit einem Getriebe, das in einem Getriebegehäuse untergebracht ist, einer Gelenkwelle, die sich im wesentlichen entlang eines Gelenkwellengehäuses erstreckt, mindestens einem Achsgetriebe, das in einem Achsgetriebegehäuse untergebracht ist, wobei das Getriebe, die Gelenkwelle und das Achsgetriebe kinematisch miteinander gekoppelt sind und die Gehäuse in der Reihenfolge ihrer Anordnung im Antriebsstrang miteinander zu einem Antriebsstrangverbund verbunden sind. Innerhalb des Antriebsstrangverbunds ist mindestens eine elastisch gestaltete Verbindungsstelle vorgesehen.

## Beschreibung

Die vorliegende Erfindung betrifft einen Antriebsstrang für Fahrzeuge gemäß dem Oberbegriff des Patentanspruches 1.

Moderne heckgetriebene bzw. allradgetriebene Kraftfahrzeuge weisen üblicherweise einen Antriebsstrang auf, bei dem der Verbrennungsmotor und das Getriebe im Bereich der Vorderachse angeordnet sind. Bei einem "Standard-Hinterachsantrieb" führt vom Getriebeausgang eine Gelenkwelle nach hinten zu einem Hinterachsgetriebe, welches Drehmoment über Abtriebswellen auf die Antriebsräder überträgt. Bei einem Allradantrieb ist zwischen dem Getriebeausgang und der Gelenkwelle noch ein Verteilergetriebe vorgesehen, das über eine nach vorne führende Gelenkwelle und einem Vorderachsgetriebe mit den Vorderrädern verbunden ist. Das über die Gelenkwelle übertragene Antriebsmoment erzeugt ein Reaktionsmoment um die Gelenkwelle, d.h. um eine Parallele zur Fahrzeuglängsachse. Im Hinterachsgetriebe wird das eingeleitete Drehmoment in ein linkes bzw. rechtes Abtriebsmoment umgewandelt. Die Abtriebsmomente erzeugen wiederum ein Reaktionsmoment um die Abtriebswellen, d.h. um eine Fahrzeugquerachse. Die beiden Reaktionsmomente überlagern einander und erzeugen an den Motorlagern, den Getriebelagern und Fahrschemellagern Reaktionskräfte. Diese Reaktionskräfte können die erforderlichen freien Schwingwege, die zur Isolation der Antriebsstrangschwingungen vorgesehen sind, erheblich beeinträchtigen. Üblicherweise sind alle Antriebsstrangbauteile und die angetriebenen Fahrschemel elastisch an der Karosserie angeordnet. Die Lager des Verbrennungsmotors und des Getriebes sowie die Fahrschemel haben die Aufgabe, die im Antriebsstrang erzeugten Schwingungen gegenüber der Karosserie zu isolieren. Die Schwingungen werden primär durch die intermittierende Arbeitsweise des Verbrennungsmotors sowie durch drehende Antriebsstrangbauteile verursacht, aber auch durch Biege- und Oberflächenschwingungen der Antriebsstrangbauteile. Die über die Lager übertragenen Restschwingungen sind die Hauptursache für unerwünschte Antriebsgeräusche im Fahrzeug.

Bekannt sind ferner Antriebsstränge, bei denen die einzelnen Antriebsstrangkomponenten, das heißt das Gelenkwellengehäuse, das Getriebegehäuse und das Hinterachsgetriebegehäuse im wesentlichen starr zu einem Antriebsstrangverbund miteinander verbunden sind. Anordnungen, bei denen das Getriebe und das Achsgetriebe im Bereich einer Achse, insbesondere der Hinterachse angeordnet sind, werden gelegentlich auch als "Transaxle-Bauweisen" bezeichnet.

Ferner ist eine Antriebsstrangsanordnung bekannt, bei welcher der Motor und das Getriebe im Bereich der Vorderachse angeordnet sind und über ein Antriebsstrang-Verbindungsbauteil mit dem im Bereich der Hinterachse angeordneten Hinterachsgetriebe verbunden ist.

Bei einer anderen Anordnung ist der Motor im Bereich der Vorderachse angeordnet und über eine Gelenkwelle mit dem im Hinterachsbereich angeordneten Getriebe und mit dem ebenfalls im Hinterachsbereich angeordneten Hinterachsgetriebe kinematisch gekoppelt ist, wobei das Antriebsstrang-Verbindungsbauteil das Motorgehäuse, das Getriebegehäuse und das Hinterachsgetriebegehäuse miteinander zu einer im wesentlichen starren Einheit verbindet.

Das Antriebsstrang-Verbindungsbauteil nimmt die vom Antriebsstrang erzeugten Reaktionsmomente im Gehäuseverbund auf und verhindert somit weitgehend Reaktionskräfte an den Lagern zwischen dem Antriebsstrang und der Karosserie. Insbesondere werden die Reaktionskräfte, die aus den Abtriebswellenmomenten resultieren, durch die lange Abstützbasis des Antriebsstranges verringert.

Manche Antriebsstränge neigen aufgrund ihrer großen Länge zu resonanzartigen Strukturschwingungen, die durch die intermittierende Arbeitsweise des Verbrennungsmotors sowie durch drehende Antriebsstrangbauteile innerhalb des Betriebsdrehzahlbereichs angeregt werden. Derartige Schwingungen führen zu Brummgeräuschen im Fahrzeuginnenraum, was bei Sportwagen tolerierbar sein mag, was aber bei auf Komfort ausgelegten Fahrzeugen störend ist.

Die Frequenz resonanzartiger Strukturschwingungen im Antriebsstrang ist primär durch die Massen bzw. Massenträgheiten und Biegsteifigkeiten der einzelnen Antriebsstrangkomponenten bestimmt. Zwar kann durch konstruktive Maßnahmen an der Antriebsstrang-Verbindungsstruktur auf das Schwingungsverhalten des Antriebsstranges Einfluss genommen werden. Bei modernen Plattformkonzepten, bei denen verschiedene Motor-Getriebevarianten in ein und dieselbe Fahrzeugkarosserie eingebaut werden, ist dies aber nur mit unakzeptabel hohem Aufwand realisierbar.

Aufgabe der Erfindung ist es, einen Antriebsstrang für Fahrzeuge zu schaffen, der hinsichtlich der Entstehung bzw. Übertragungen von Schwingungsgeräuschen optimiert ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Antriebsstrangverbund aus, der ein in einem Getriebegehäuse untergebrachtes Getriebe, eine in einem "Gelenkwellengehäuse" untergebrachte Gelenkwelle und mindestens ein in einem Achsgetriebegehäuse untergebrachtes Achsgetriebe aufweist. Bei einem Standardantrieb handelt es sich bei dem Achsgetriebe um ein Hinterachsgetriebe (bei Hinterachsantrieb) bzw. um ein Vorderachsgetriebe (bei Vorderachsantrieb).

Zusätzlich kann am Getriebe ein Verteilergetriebe angeordnet sein, das mit einem zweiten Achsgetriebe gekoppelt ist. Im Fall von zwei Achsgetrieben ist ein Allradantrieb möglich, wobei das eine Achsgetriebe an der Vorderachse und das andere Achsgetriebe an der Hinterachse angeordnet ist.

Der oben erwähnte Begriff "Gelenkwellengehäuse" ist im folgenden sehr breit zu verstehen. Das "Gelenkwellengehäuse" fungiert ganz allgemein als "Trägerelement". Das "Gelenkwellengehäuse" bzw. das "Trägerelement" kann ein geschlossenes Rohr oder ein sonstiges geschlossenes Gehäuse sein, in dem sich die Gelenkwelle erstreckt. Alternativ dazu kann das "Gelenkwellengehäuse" aber auch in Form eines beliebig gestalteten Trägerelements ausgeführt sein, das oberhalb, neben oder unterhalb der Gelenkwelle entlang derselben verläuft.

Das Getriebegehäuse, das Gelenkwellengehäuse und das mindestens eine Achsgetriebegehäuse sind entsprechend ihrer Anordnung zu dem Antriebsstrangverbund miteinander verbunden. Wie bereits angedeutet, weist der Antriebsstrang eines Allradantriebs zusätzlich ein Verteilergetriebe mit einem Verteilergetriebegehäuse sowie ein zweites Achsgetriebe mit einem zugeordneten zweiten Achsgetriebegehäuse auf. Das Getriebe, die Gelenkwelle und das mindestens eine Achsgetriebe sind in bekannter Weise kinematisch miteinander gekoppelt.

Der Kern der Erfindung besteht nun darin, dass die einzelnen Komponenten des Antriebsstrangverbunds nicht vollkommen starr miteinander verbunden sind, sondern dass mindestens zwei Teilkomponenten des Antriebsstrangverbunds an ihren Koppelstellen elastisch miteinander verbunden sind. Eine elastische Kopplung kann dadurch erreicht werden, dass zwischen zwei miteinander verbundenden "Gehäusebauteilen" des Antriebsstrangs ein oder mehrere elastische Zwischenelemente vorgesehen sind, z.B. Gummilager.

Vorzugsweise sind nicht nur eine, sondern zwei Verbindungsstellen zwischen "Gehäusekomponenten" des Antriebsstrangs elastisch ausgeführt. Aus funktionalen Gründen kann aber eine der beiden Verbindungen auch im wesentlichen starr, d.h. ohne Gummilager ausgeführt sein. Dies gilt für alle der oben beschriebenen Bauweisen, d.h. für Standardheckantrieb mit Frontmotor, Allradantrieb mit Frontmotor sowie für Fahrzeuge mit Heckmotor mit Vorderrad- oder Allradantrieb.

Die miteinander verbundenen "Gehäusekomponenten", d.h. das Getriebegehäuse, das bei einem Allradantrieb vorgesehene Verteilergetriebegehäuse, das Gelenkwellengehäuse und das eine - oder bei Allradantrieb - die beiden Achsgetriebegehäuse bilden einen Antriebsstrangverbund. Das Gelenkwellengehäuse fungiert hierbei als Trägerelement, das auch als Antriebsstrang-Verbindungsbauteil bezeichnet werden kann. Die Gelenkwelle erstreckt sich dann entlang dem Antriebsstrang-Verbindungsbauteil. Das Antriebsstrang-Verbindungsbauteil kann in vielfältiger geometrischer Bauweise ausgebildet sein. Wesentlich ist, dass das Antriebsstrang-Verbindungsbauteil als Trägerverbindung fungiert, die neben, über, oder unter der Gelenkwelle oder als Rohr um die Gelenkwelle ausgebildet sein kann. Am Antriebsstrang-Verbindungsbauteil sind Aufnahmen für die Koppellager angeordnet, welche die Verbindung zu den übrigen Antriebsstrangkomponenten herstellen. Die Biegesteifigkeit des Antriebsstrang-Verbindungsbauteils ist deutlich höher als die Steifigkeit der Koppellager. Das Antriebsstrang-Verbindungsbauteil kann über Gelenkwellenlager die Führung der Gelenkwelle übernehmen und kann als Träger zur Befestigung weiterer Fahrzeugbauteile, wie z.B. Abgasanlagenkomponenten, Hydraulikleitungen, Kraftstoffleitungen etc. dienen.

Je nach Anforderungen an die Fahrzeuglänge kann die Gelenkwelle einteilig oder mehrteilig ausgeführt sein. Falls erforderlich kann die Gelenkwelle über ein oder mehrere Lager am Antriebsstrang-Verbindungsbauteil gelagert sein. Die Gelenkwellenlager sind vorzugsweise als Rillenkugellager mit einer am Innen- oder Außenring liegenden Gummierung ausgebildet. Die Gummierung ermöglicht den Ausgleich einer geometrischen Verlagerung der Gelenkwelle gegenüber dem Antirebsstrang-Verbindungsbauteil. Zum Ausgleich des Beugewinkels, der an den Lagerstellen des Antriebsstrang-Verbindungsbauteils entsteht, können in der Gelenkwelle Ausgleichselemente vorgesehen sein, wie z.B. ein Gleichlaufgelenk oder ein Kreuzgelenk etc. Zum Ausgleich axialer Bewegungen kann ein Längsverschiebestück vorgesehen sein.

Um Antriebsstrangsschwingungen zu "isolieren" ist der gesamte Antriebsstrangverbund vorzugsweise über vier Tragarme elastisch mit der Fahrzeugkarosserie verbunden. Zwei der Tragarme stellen die Verbindung des Motors mit dem Vorderwagen her. Die beiden anderen Tragarme verbinden den hinteren Teil des Antriebsstrangverbundes mit dem Fahrzeugheck. Die Lagerung des Antriebsstrangverbunds erfolgt über Gumminlager oder auch über hydraulisch dämpfende Lager an steifen Anbindungsstellen der Karosserie oder an den Fahrwerksträgern. Im Heckbereich können die Tragarme entweder Teil des Antriebsstrang-Verbindungsbauteils oder Teil des Hinterachsgetriebegehäuses sein. Alternativ dazu kann der hintere Teil des Antriebsstrang-Verbindungsbauteils auch auf dem elastischen Fahrschemel gelagert sein, wodurch die Lagerisolation des Fahrschemels ausgenutzt werden kann. Der Tragarm kann dann einen Teil des Achsträgers, zum Beispiel des Hinterachsquerträgers ersetzen.

Im folgenden wir die Erfindung im Zusammenhang mit der Zeichnung näher erläutert. Es zeigen:
- Figur 1, 2: ein Ausführungsbeispiel mit zwei elastischen Verbindungsstellen im Antriebsstrang;
- Figur 3,4: ein Ausführungsbeispiel mit nur einer elastischen Verbindungsstelle im Antriebsstrang; und
- Figur 5: ein Ausführungsbeispiel mit ringförmigen Gummilagern.

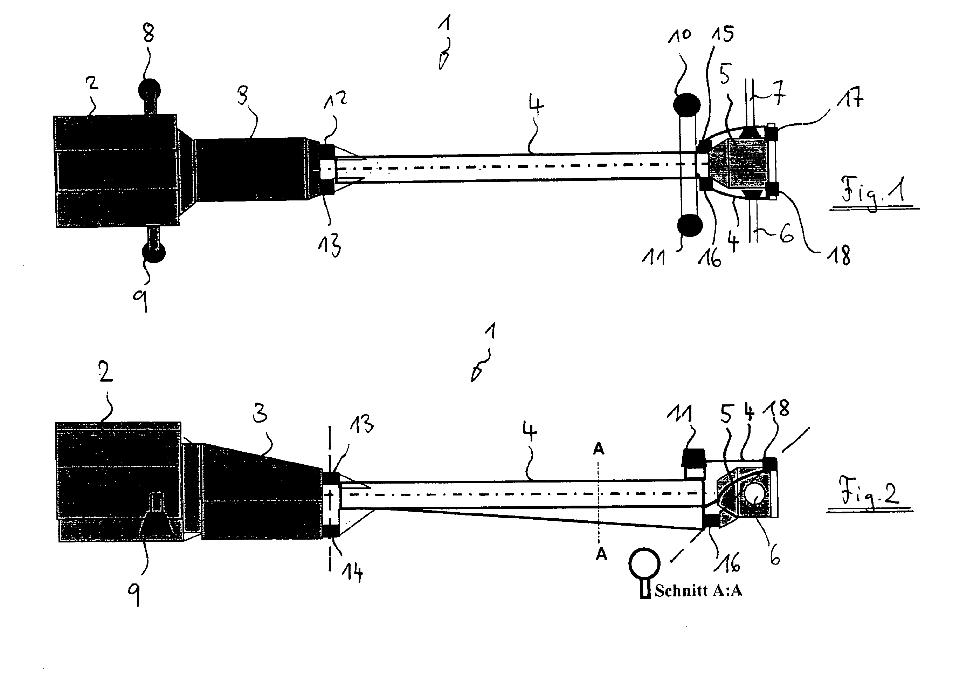

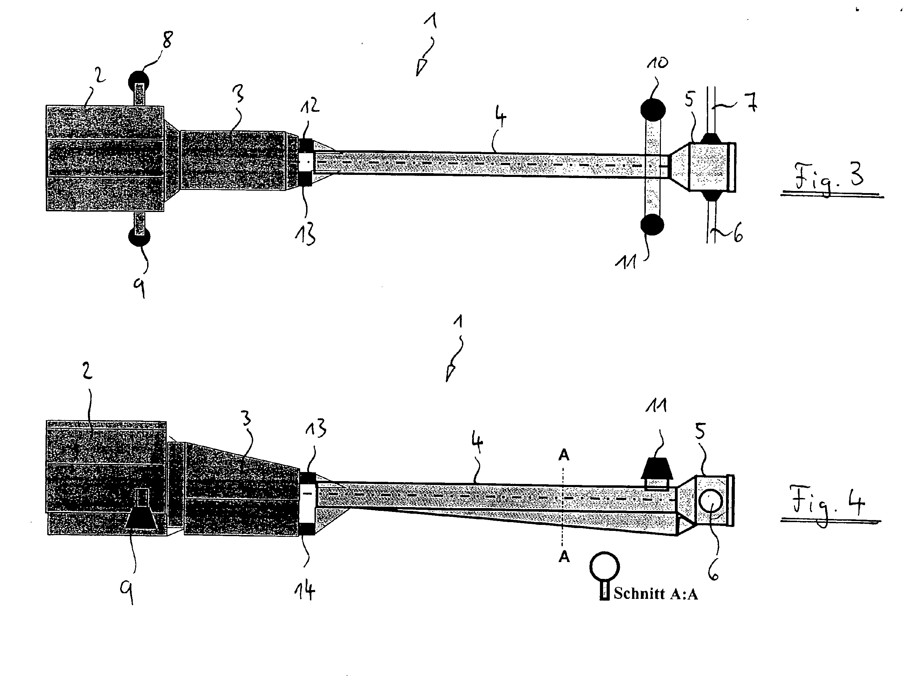

Die **Figuren 1 und 2** zeigen in Draufsicht bzw. in Seitenansicht einen Antriebsstrang 1 eines Fahrzeuges mit einem Motor 2, einem daran angeflanschten Getriebe, das in einem Getriebegehäuse 3 untergebracht ist, einer Gelenkwelle, die in einem Gelenkwellengehäuse, das heißt in einem Gelenkwellenrohr 4 untergebracht ist und einem Hinterachsgetriebe, das in einem Hinterachsgetriebegehäuse 5 untergebracht ist. Das Hinterachsgetriebe ist über Abtriebswellen 6, 7 mit Antriebsrädern verbunden.

Der Antriebsstrang 1 ist über Karosserielager 8 - 11, die z.B. als Gummilager ausgebildet sind, mit der Fahrzeugkarosserie (nicht dargestellt) verbunden.

Das Getnebegehäuse 3, das Gelenkwellengehäuse 4 und das Hinterachsgetriebegehäuse 5 bilden einen Antriebsstrang-Verbund, der im wesentlichen aber nicht vollkommen starr ist. Das als Antriebsstrang-Verbindungsbauteil fungierende Gelenkwellengehäuse 4 nimmt die durch das Gelenkwellenmoment und die Abtriebswellenmomente erzeugte Reaktionsmoment auf. Es verhindert also, dass die Reaktionsmomente unmittelbar auf die Karosserie bzw. das Fahrwerk wirken.

Wie bereits erwähnt, muss der Antriebsstrang-Verbund nicht notwendigerweise durch Gehäuse im Sinne geschlossener Gehäuseelemente gebildet sein. Beispielsweise kann anstatt eines geschlossenen Gelenkwellengehäuses auch eine andersartig gestaltete Trägerverbindung zwischen dem Getriebe und dem Hinterachsgetriebe vorgesehen sein, wobei die Trägerverbindung beispielsweise neben, über oder unterhalb der Gelenkwelle angeordnet sein kann.

Wesentlich ist, dass der Antriebsstrang-Verbund, der hier durch das Getriebegehäuse 3, das Gelenkwellengehäuse 4 und das Hinterachsgetriebegehäuse 5 gebildet ist, mindestens an einer Stelle bzw. in einem Bereich elastisch ausgebildet ist. Bei dem in den Figuren 1 und 2 gezeigten Ausführungsbeispiel sind das Getriebegehäuse 3 und das Gelenkwellengehäuse 4 über elastische Zwischenelemente bzw. Lager 12 - 14 miteinander verbunden. Die Lager 12 - 14 können in Umfangsrichtung voneinander beabstandet um die Abtriebswelle des Getriebes bzw. die Gelenkwelle herum angeordnet sein. Alternativ dazu können auch zwei vertikal übereinander angeordnete Büchsenlager vorgesehen sein.

Der hintere Bereich des Gelenkwellengehäuses 4 ist über elastische Lager 15 - 18 mit dem Hinterachsgetriebegehäuse 5 verbunden. Somit sind bei dem in den **Figuren 1 und 2** dargestellten Ausführungsbeispiel zwei elastische Lagerstellen im Antriebsstrang vorgesehen. Die Biegesteifigkeit des Antriebsstrangs 1 ist aufgrund der elastischen Lager 12 - 14 und 15- 18 nicht mehr durch die Steifigkeit der Gehäuse, d.h. des Getriebegehäuses 3, des Gelenkwellengehäuses 4 und des Hinterachsgetriebegehäuses 5 bestimmt, sondern im wesentlichen durch die Steifigkeit der Lager 12 - 14 und 15 - 18. Die Biegesteifigkeit des Antriebsstranges kann somit ganz gezielt durch die Wahl von Lagern mit entsprechenden Elastizitäten ausgelegt werden.

Die **Figuren 3 und 4** zeigen in Draufsicht und in Seitenansicht ein Ausführungsbeispiel, bei dem der Antriebsstrang 1 nur eine elastische Verbindungsstelle aufweist. Die elastische Verbindungsstelle ist im vorderen Bereich des Antriebsstranges 1 vorgesehen, das heißt zwischen dem Getriebegehäuse 3 und dem Gelenkwellengehäuse 4. Entsprechend dem Ausführungsbeispiel der **Figuren 1 und 2** ist die elastische Verbindung durch die Lager 12 - 14 gebildet. Das hintere Ende des Gelenkwellengehäuses 4 ist bei dem Ausführungsbeispiel der Figuren 3 und 4 im wesentlichen starr mit dem Hinterachsgetriebegehäuse 5 verbunden.

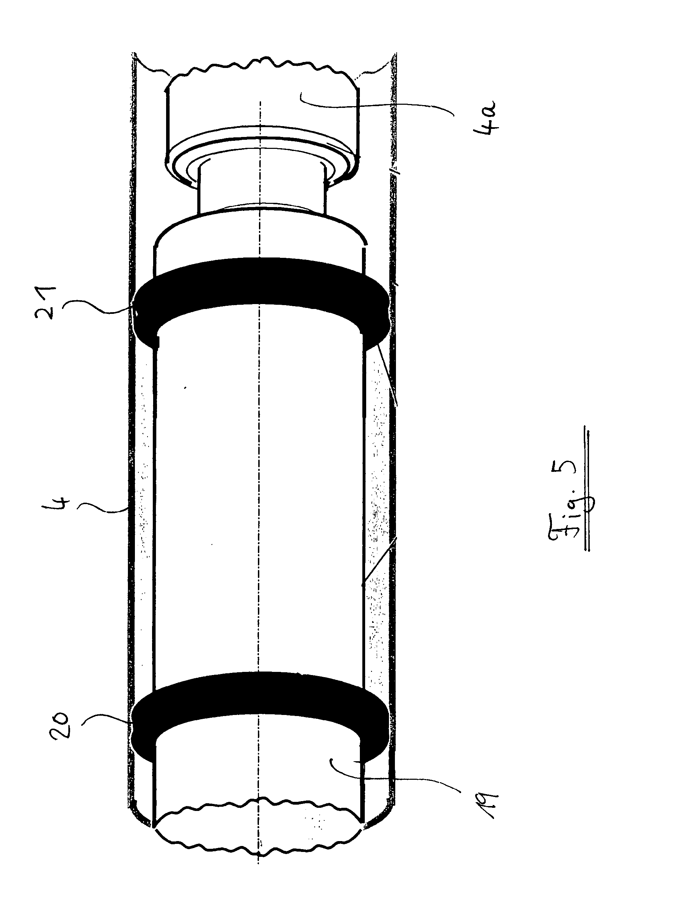

**Figur 5** zeigt ein Ausführungsbeispiel, bei dem das Gelenkwellengehäuse 4 wieder als Gelenkwellenrohr ausgebildet ist. Auf einen getriebefesten Abtriebsstummelflansch 19 ist ein Paar axial voneinander beabstandeter elastischer Ringlager 20, 21 aufgeschoben. Die Ringlager 20, 21 verbinden den getriebefesten Flansch 19 mit dem Gelenkwellengehäuserohr 4. Die Ringlager 20, 21 ermöglichen translatorische Strukturschwingungen und rotatorische Schwingungen des Gelenkwellenrohrs 4 gegenüber dem getriebefesten Flansch 19. Die Gelenkwelle, die hier mit den Bezugszeichen 4a bezeichnet ist, ist mit einer Abtriebswelle des Getriebes (nicht dargestellt) verbunden.

Ausdrücklich sein darauf hingewiesen, dass eine Anordnung, wie sie in Fig. 5 beschrieben ist, auch zur Verbindung des Gelenkwellenrohrs mit dem Achsgetriebe, insbesondere mit dem Hinterachsgetriebe eingesetzt werden kann. In diesem Fall wäre der Flansch 19 ein Teil des Achsgetriebes.

## Patentansprüche

1. Antriebsstrang (1) für Fahrzeuge mit
einem Getriebe, das in einem Getriebegehäuse (3) untergebracht ist,
einer Gelenkwelle, die sich im wesentlichen entlang eines Gelenkwellengehäuses (4) erstreckt,
mindestens einem Achsgetriebe, das in einem Achsgetriebegehäuse (5) untergebracht ist,
wobei das Getriebe, die Gelenkwelle und das Achsgetriebe miteinander gekoppelt sind und die Gehäuse (3, 4, 5) in der Reihenfolge ihrer Anordnung im Antriebsstrang (1) miteinander zu einem Antriebsstrangverbund verbunden sind,
**dadurch gekennzeichnet, dass**
innerhalb des Antriebsstrangverbunds mindestens eine elastisch gestaltete Verbindungsstelle (12-14; 15-18; 20, 21) vorgesehen ist.

2. Antriebsstrang (1) nach Anspruch 1, wobei der Antriebsstrang ein Allrad-Antriebsstrang ist, der am Getriebeausgang ein Verteilergetriebe aufweist, das über eine Welle mit einem zweiten Achsgetriebe verbunden ist.

3. Antriebsstrang (1) nach Anspruch 2, wobei das Verteilergetriebe in einem an das Getriebegehäuse angeflanschten Verteilergetriebegehäuse untergebracht ist.

4. Antriebsstrang (1) nach Anspruch 2, wobei das Verteilergetriebe in dem Getriebegehäuse untergebracht ist.

5. Antriebsstrang (1) nach einem der Ansprüche 1 bis 4, wobei mindestens zwei der Gehäuse (3, 4, 5) des Antriebsstrangverbunds elastisch miteinander verbunden sind.

6. Antriebsstrang (1) nach einem der Ansprüche 1 bis 6, wobei zwischen mindestens zwei der Gehäuse (3, 4, 5) ein Zwischenelement (12 - 14; 15- 18, 20, 21) aus einem elastischen Material angeordnet ist.

7. Antriebsstrang (1) nach einem der Ansprüche 1 bis 6, wobei das Getriebegehäuse (3) bzw. das Verteilergetriebegehäuse über das Gelenkwellengehäuse (4) mit dem Achsgetriebegehäuse (5) verbunden ist.

8. Antriebsstrang (1) nach einem der Ansprüche 1 bis 7, wobei zwischen dem Getriebegehäuse (3) und dem Gelenkwellengehäuse (4) mindestens ein elastisches Zwischenelement (12 - 14) angeordnet ist.

9. Antriebsstrang (1) nach einem der Ansprüche 1 bis 8, wobei zwischen dem Gelenkwellengehäuse (4) und dem Achsgetriebegehäuse (5) mindestens ein elastisches Zwischenelement (15 - 18) angeordnet ist.

10. Antriebsstrang (1) nach einem der Ansprüche 1 bis 9, wobei das Getriebegehäuse (4) ein zumindest an einer Seite offenes Trägerelement ist, das über, neben oder unterhalb der Gelenkwelle angeordnet ist.
